# EUROPEAN PATENT APPLICATION

(11) **EP 1 840 031 A1**
(43) Date of publication of application: **03.10.2007**
(21) Application number: 05767232.1
(22) Date of filing: 28.07.2005
(51) Int. Cl.: B65B 13/24, A01G 17/08

(54) **BINDING DEVICE AND BINDING METHOD FOR HORTICULTURE**

(30) Priority: 20.12.2004 WO PCT/JP2004/019003
(71) Applicant: Aglis Co., Ltd., Yama-shi, Fukuoka 8340055 (JP)
(72) Inventor: NAKAMURA, Hiroyuki c/o Aglis Co.Ltd., Yame-shi, Fukuoka 834-0055 (JP); WATANUKI, Moriyuki, Kamagaya-shi Chiba 273-0106 (JP)
(74) Representative: Liedl, Christine
(86) International application number: PCT/JP2005/013810
(87) International publication number: WO 2006/067886

(57) **Abstract**

A binding device for horticulture for binding a tape by cutting and bending a tape overlapping part is provided.

In the binding device, a blade (4) is attached to one of an arm (3) or a main body (2), and a blade receiver (5) is attached to the other of them facing with each other. The blade (4) and the blade receiver (5) form cutting to a tape overlapping part, and the blade (4) has a shape for cutting and bending the tape to form a locking to the inner end of the cut tape as well as the blade receiver (5) is formed to pull the cut tape out therefrom in an outer end direction, so that the tape can be maintained in a bound state by locking the tape itself.

## Description

### [Technical Field]

The present invention relates to a binding device for horticulture and a method of binding a horticulture tape using the binding device.

### [Background Art]

As a device for circularly binding tapes for agriculture and horticulture, so-called binding device for horticulture, there is disclosed a device comprising a main body and an arm curved and protruded upward and turnably connected with the upper side of the main body thereof. In the device, a tape is stretched between the ends of the main body and the arm, and a vine and the like of a fruit tree are put in the curved arm, and the tape can be bound by a stapler and cut off by closing the main body and the arm (refer to, for example, Patent Reference 1).

Note that, for not horticulture, as a device for bundling and binding a plurality of paper sheets, there is disclosed a device comprising a die having laterally spreading head formed to a rod-shaft-like and a punch head which can be inserted into the die. The paper sheets are bound by cutting in the corner of the bundled paper sheets by the die and the punch head (refer to for example, Patent Reference 2).

[Patent Reference 1] International Patent Application No.WO/2003/005805
[Patent Reference 2]Japanese Patent Application Laid-Open No.S56-500248

### [Disclosure of the invention]

### [Problems to be solved by the invention]

Although the binding device for horticulture can improve a working efficiency of binding compared with that by hand, the device is ordinarily used in an environment in which a binding vines (new treetop) of grape tree and the like is carried out several thousands of times a day to wires and the like which is extend throughout a fruit tree terrace in order to protect it.
The conventional binding device has problems in that it has a complex structure because it accommodates staples for binding tapes and fullfills a fastening mechanism, is heavy because it is required to have robustness and durability, and further requires gripping power to a worker for fastening.
Moreover, when a binding is repeated for a long time, adverse effect on the worker by such burden and fatigue is big as the workers suffer from pain due to fatigue that it is difficult for him or her to raise arms and to move hands after the daily job is finished. Accordingly, it is desired to develop a binding device that is light in weight and excellent in operability.

Further, a tape is broken or deteriorated with age and drops onto the ground, and mixed with soil. At the same time, since a countless number of staples and the like also drop and are mixed with soil, there might be a danger of a person is injured and ambient pollution such as ground pollution, and thus a countermeasure against those problem must be taken.

There is a conceivable means for binding a tape by coating an adhesive and the like thereto instead of staples. However, since a binding is carried out in the outdoor, an adhesion effect may be weakened by wind, rain, soil dust, and the like, which requires to improve an adhesive coating mechanism, instant adhesion properties, and adhesion stability. Morever, there is a possibility that a device is made complex and increased in size and a cost is increased by the use of an adhesive, and further, an adhesive is mixed with soil together with a tape which would become a cause of ambient pollution such as ground pollution and the like, for these reasons, the means is not practically usable.

It should be noted that the device for binding a plurality of paper sheets disclosed in the Patent Reference 2 can be applied to office processing. However, it cannot carry out a binding even if it is intended to use for horticulture.
This is because this device is based on only such an binding idea that bundled paper sheets are held by one hand, corners of them are punched by being applied to a punching of the device, and then the device is removed from the paper sheets. The binding device for horticulture binds a branch and a wire with a tape while taking them thereinto and finishes a binding by pulling and removing the bound branch and the wire to the outside of the end of the device which is an opposite direction from the binded (blade) at the same time as binding.
Accordingly, said binding idea of the device for binding a plurality of paper sheets cannot carry out binding for horticulture.
Even if it is intended to pull out and remove the bound paper sheets against themselves (although this is impossible), they cannot be pulled out because the wide part of the cutting device is caught by the die, and, when it is intended to forcibly pull out them, the cutting part on the tape likely be broken.

The inventors of the present invention have achieved the present invention by taking the above problems of the conventional methods into consideration and further finding that the above problems cannot be overcome as long as the conventional binding devices are used.
More specifically, a main object of the present invention is a binding device and a binding method for horticulture based on an new technical idea of binding and maintaining the bound by only a tape without using a binding material such as a staple and the like in order to solve the various conventional problems.
Moreover, the present invention is to provide a binding device and a binding method capable of using a tape having appropriate strength comprising paper, a biodegradable material, or a complex material as the aforesaid tape.

Further, a main object of the present invention is to provide a binding device and a binding method for horticulture unnecessary to have consumable goods as binding material such as staples except tape which can realize a concise and lightweight structure and convenient operatability since the device has no need to have an accommodating mechanism, an accommodating manipulation of the consumable goods, a fastening mechanism and a fastening manipulation.
For the above reasons, the device and the method have favorable effect on many things such as a workload can be greatly reduced, a working efficiency with one hand can be significantly improved which allows continual manupilation repeatedly to be easier, materials to be carried can be reduced, malfunction of the device can hardly occurred, maintenance can be carried out easily, a cost can be reduced, and productivity can be enhanced.

Further, the another main object of the present invention is to provide a binding device and a binding method for horticulture using a tape which can hardly be cause of ambient pollution and bundle by only itself instead of using staples or an adhesive which likely be cause of injury and ambient pollution.
The present invention can achieve various objects other than the above objects.

To solve the above problems, a binding device for horticulture, comprising a main body and an arm turnably connected with the main body so that when the both ends of the main body and the arm are opened, a tape is pulled out while stretched from one end to the other end, and that when the both ends thereof are closed, the tape can be formed to an annular shape inward of the device as well as tape can be bound and cut off in an overlapping state on the end thereof, wherein a blade is formed to one of the arm or the main body, and a blade receiver is formed to the other of them so that the blade confronts the blade receiver, and they form cutting to a tape overlapping part, and the blade has a shape for cutting and bending the tape to form a locking to the inner end of the cut tape as well as the blade receiver is formed to pull the cut tape out therefrom in an outer end direction, so that the tape can be maintained in a bound state by locking the tape itself.

Preferably, the blade can punch and bend the tape inward from an end and has a swelling head which the inner end of the blade tip is wider than the end of that, and the blade receiver is as a punching hole having a swelling head hole in which the both ends are open wider the same as the aforementioned, and when the end of the arm closes, the swelling head is inserted into the wide opening of the swelling head hole on the inner end thereof and passes therethrough.
Further, it is preferable that the blades, more than two, are arranged in a line parallel to the both end of the device, and at least one of the blades can be arranged as a guide blade protruded to the blade receiver beyond the other blades.
In particular, it is preferable that the three blades are arranged in a line parallel to the both end of the device, and the center blade is arranged as a guide blade protruded to the blade receiver beyond the two other sides of those blades.
A binding device for horticulture according to claim 1, wherein blades are formed to at least an end and an inner side thereof so that they intersect a tape lengthwise direction, the blade on the inner side is formed so that the inner side thereof in a tape width direction inclines in an end direction, the blade receiver is formed so that it comes into sliding contact with the blade and shears the tape when the end of the arm closes as well as the blades comprise pressing pieces for bending a cut tape.
It is more preferable that the tape is formed of paper, a biodegradable material, or a composite material mainly comprising them, which is not limited to.

Further, there is provided a method of annularly binding a new treetop and the like with a horticulture tape using a binding device for horticulture arranged so that an arm is turnably connected with a main body , a tape is pulled out by the both ends of the main body and the arm, and the tape is formed to an annular shape inward of the device as well as the tape is bound in an overlapping state and cut off on an end , the method comprising forming the tape, which is pulled out by opening the both ends, to the annular shape and then overlapping the inner surface of a tape end and the inner surface of a tape root by closing the both ends forming cutting and folding part to a tape overlapping part by a blade and a blade receiver formed to the both ends locking the cutting formed to the inner end of one tape to the cutting of the other tape so that the tape is maintained in a bound state; and pulling the tape overlapping part including the above out in the outer end direction of the device.

### [Effects of the invention]

In a binding device for horticulture of the present invention, a tape is bound by locking the tape itself and the bound state of the tape is maintained by a concise mechanism and a convenient manipulation without using a material for maintaining the bound state such as staples, an adhesive and an adhesive tape other than a tape. Accordingly, since the device is reduced in weight because a stapler and the like are not used as well as the device can be comprising a light material, the device can be held up by one hand without burden, and required less grip force than before. Thus, it is possible to make continuous and repeat binding be easier. Since consumable goods such as the staples are not used, it is not necessary to replace them, and thereby a cost can be reduced. Also since the structure is concise, the device can be easily maintained and excellent in durability. Further, the device allows a binding to be more safely done and contributes to prevent a soil contamination.
The method of binding a horticulture tape of the present invention can bind the tape itself with necessary and sufficient strength by a simple manipulation of only gripping the binding device and make the tape unlikely be removed without using a stapler and the like.

### [BRIEF DESCRIPTION OF THE DRAWINGS]

FIG. 1 is a schematic exploded perspective view showing an embodiment of a binding device for horticulture of the present invention;
FIG. 2 is a sectional side view showing an end of the device of FIG. 1;
FIG. 3 is a schematic exploded perspective view showing the end of a main body as the component of the device of FIG. 1;
FIG. 4 is a schematic perspective views showing an example of a blade as the component of the device of FIG. 1, wherein FIG. 4A is a top view, and FIG. 4B is a side view;
FIG. 5 shows an operation of a protection member as a component of the device of FIG. 1, wherein FIG. 5A shows a state before operating, FIG. 5B shows a state during operating, and FIG. 5C shows a state after operating;
FIG. 6 is a schematic perspective view showing another example of the blade as the component of the device of FIG. 1;
FIG. 7 is a schematic exploded perspective view showing the end of an arm as the component of the device of FIG. 1;
FIG. 8 is a schematic perspective view showing a tape housing as the component of the device of FIG. 1;
FIG. 9 is a schematic side view showing an assembled state of the device of FIG. 1;
FIG. 10 is a schematic side view showing a state that a tape is pulled out between the both ends of the main body and the arm in the device of FIG. 1;
FIG. 11 is a schematic side view showing a state that a member to be bound is bound by a tape using the device of FIG. 1;
FIG. 12 is a schematic perspective view showing a horticulture tape bound by the device of FIG. 1;
FIG. 13 is an enlarged perspective view showing an overlapping of the tape of FIG. 12;
FIG. 14 is a schematic side view showing a state that a cut is formed to the tape by the device of FIG. 1;
FIG. 15 is a view when a state that cuts are formed to the tape by the device of FIG. 1 is observed from above;
FIG. 16 shows schematic side sectional views of a state that a tape is extracted from the device of FIG. 1, wherein FIG. 16A shows a state before extracting and FIG. 16B shows a state during being extracted;
FIG. 17 is an enlarged perspective view showing a bound state of the tape of FIG. 12;
FIG. 18 is a schematic side view showing another embodiment of the binding device for horticulture of the present invention;
FIG. 19 shows a blade as a component of the device of FIG. 18, wherein FIG. 19A shows a schematic exploded perspective view, and FIG. 19B shows a top view;
FIG. 20 is a schematic exploded perspective view showing the end of an arm as a component of the device of FIG. 18;
FIG. 21 shows a horticulture tape bound by the device of FIG. 18, wherein FIG. 21A is a schematic perspective view, FIG. 21B is an enlarged view of a tape overlapping , and FIG. 21C is a schematic side view of the tape overlapping ;
FIG. 22 is a schematic perspective view showing an example in which a tape overlapping is formed by holding back the end of a horticulture tape.

### [BEST MODE TO CARRY OUT THE INVENTION]

Hereinafter, preferable embodiments of the present invention will be explained using the drawings.

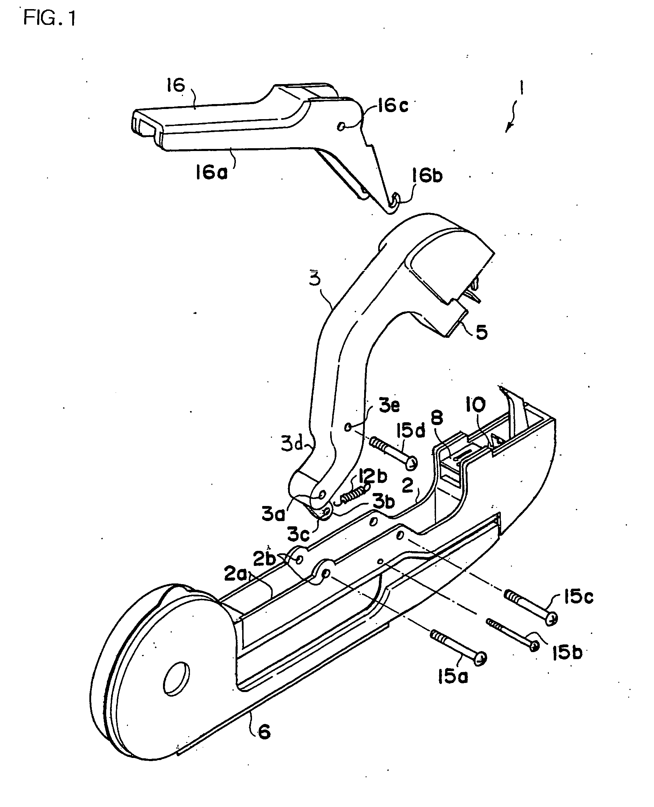

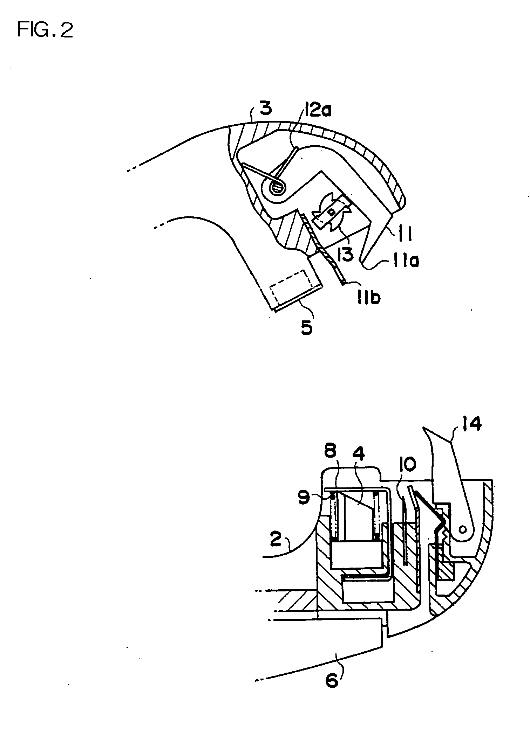

FIG. 1 shows a binding device for horticulture of an embodiment of the present invention, FIG. 2 to 8 show a structure of the binding device for horticulture of FIG. 1, and FIG. 9 to 17 show functional states of the device.

As shown in FIG. 1 or 2, the binding device for horticulture 1 of the embodiment has a main body 2, an arm 3 turnably mounted to the main body 2 at an middle thereof, a blade 4 attached to the end of the main body 2, and a blade receiver 5 attached to the end of the arm 3.
Note that, although not shown in the figure, the blade receiver 5 may be attached to the end of the main body 2, and the blade 4 may be attached to the end of the arm 3.

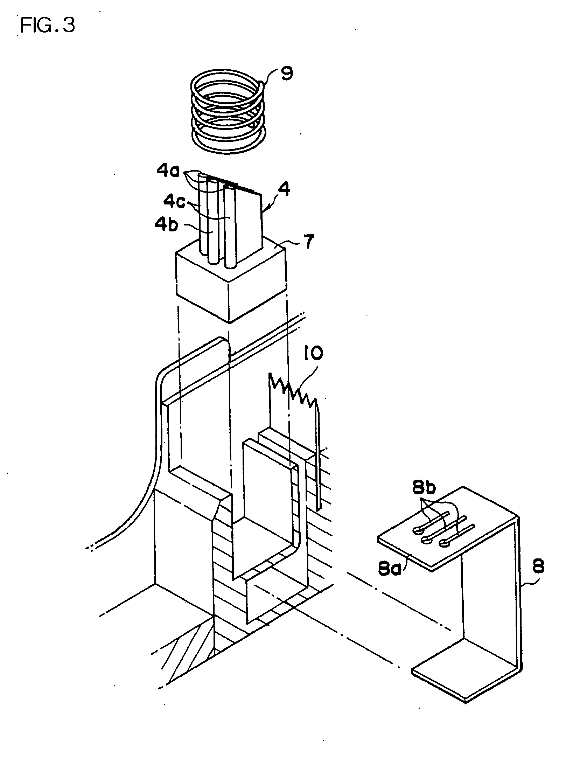

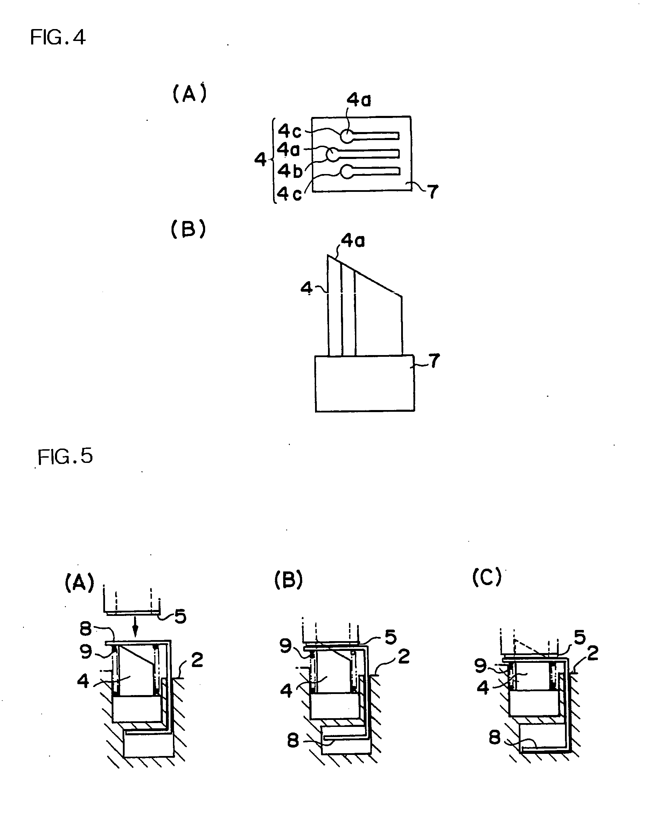

The main body 2 is comprising a plate member which has an approximately U-shaped cross section that opens upward along a lengthwise direction, the blade 4 attached to the end, and a tape accommodating part 6 attached from the lower end to the rear end thereof.
The blade 4 is attached upward and comprising three slender blades, that is, two blades 4c, and a blade 4b located therebetween. These three blades 4c and 4b are attached laterally in parallel with each other in both ends direction. As shown in FIG. 3 and 4, the upper edge surface of each blade, that is, the blade shape of the tip is formed to a rectangular shape in the middle and the end thereof, and the blades have a swelling head 4a which is formed at the inner end thereof and a wider width than that of the rectangular.
The swelling head 4a has a cross section formed to a circular shape. Each blade has a protruding apex on the inner end and gradually inclines from the inner end toward the outer end. Note that the cross section of the swelling head 4a is not limited to the circular shape and may be formed to an elliptical shape, a rectangular shape, and other polygonal shapes.

The blade 4b, in the middle of the three blades, is formed as a guide blade which higher protrudes toward the blade receiver 5 than the blades 4c which is located on the both sides of the blade 4b, and the same shape as the blade 4b. In icular, the blade 4b is formed toward the inner end slightly longer than the blades 4c, so that the inclining upper end face of the blade 4b protrudes upward of the blades 4c on the inner end thereof.
With this arrangement, the blade 4b, as the guide blade , is firstly inserted into an punching hole 5a which is described later in a leading state in order to precise positioning, and thereby a correct position of the other blades can be fixed, that is, the other blades 4 c can be inserted into the other punching holes 5a without any dislocation and those blades can be smoothly inserted into those punching holes 5a without contacting with the edges thereof, thereby the blades 4 can be lightly used for a long period almost without abrasion and deteriorating sharpness.
Further, the blade 4 is formed so that when the end of the arm 3 is closed, the swelling head s 4a is inserted into swelling head hole 5b which is the inner end of the punching hole 5a and pass therethrough upward.
With this arrangement, an overlapping tape T can be bound in such a manner that an overlapping of the tape is punched on the inner end as well as the end of the tape is bent in a broken line without being punched.

Aforementioned blade 4 is formed integrally which its root is attached to an approximately rectangular parallelepiped shaped main body of blade 7, independently combined with screw and the like to the end of the main body 2, in order to protrudes upward.
Further, a protectionmember 8 is attached in a space formed to the main body 2 so as to surround the blade 4 from the upper and lower sides and the end of the device. The protection member 8 is as a plate member having a cross section bent to an approximately U-shape, and has insertion holes 8b whose shape corresponds to the three blade and which is on the upper surface of 8a, and attached to upward of the main body 2 by spring 2 such as compression spring surrounds the blade 4 and its action up and down.
When the end of the arm 3 opens, the blade 4 is accommodated in and protected by the protection member 8 as shown in FIG. 2 and FIG. 5A, whereas when it is closed, the blade 4 protrudes upward from insertion holes 8b of the upper surface 8a by being pushed by the blade receiver 5 on the end of the arm 3 as shown in FIG. 5B and 5C.

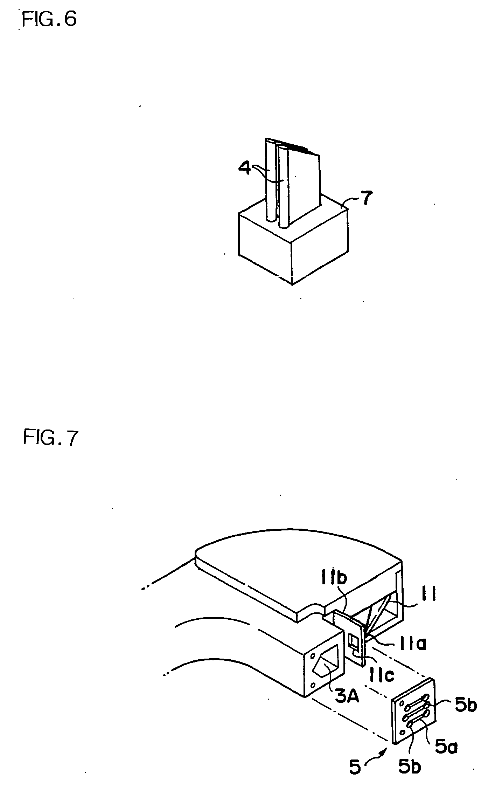

Note that although it is sufficient to compose the blade 4 of at least one blade, two blades as shown in FIG. 6, or three or more blades may be formed. However, it is most preferable to compose the blade 4 of three blades as described above in order to lightly bind the tape and keep closing pieces 18 of the tape robustly as well as to keep the high stability of binding of the tape.
Note that FIG. 6 shows an example in which two blades are attached in parallel with each other. Although the blades have the same height, it is preferable that when a plurality of blades are attached, the inner end of at least one of the blades protrudes toward the blade receiver as the guide blade.

As shown in FIG. 2, a cutting blade 10 protruding upward is attached to the futher end of the device than the blade 4, so that the cutting blade 10 cuts off the bound tape T by coming into slide and contact with the end of the device of a claw receiving piece 11 to be described later on. A delivery port is formed to the end of the device to deliver the tape T, and further a cam feed 14 protruding toward the arm 3 is attached to the end of the device. When the arm 3 and the main body 2 are closed, the end of the cam feed 14 is contacted to a cam 13 to be described later in order the cam 13 to be turned.

As shown in FIG. 1, the arm 3 is comprising a rod-like having an approximately rectangular shape and bent from a bent 3d to the end of the device so that it is curved and swelled upward, and has a shape that binding member is accommodated in the inner curved space. As shown in FIG. 2 or 5, the arm 3 includes the blade receiver 5 attached inward of it and a hook 11 at the end thereof.

As shown in FIG. 7, the blade receiver 5 is fixed to the edge face (lower surface) of the lower opening 3A of the arm 3 formed to confront the upper surface of the protection member 8 of the main body 2, and the three punching holes 5a which pass through vertically are formed in the center of an approximately rectangular-shaped plate member 7 so as to the blade receiver 5 can be placed in the lower opening 3A.
The three punching holes 5a are formed in an area smaller than the opening 3A.
The three punching holes 5a function to blades to cut and bend the tape by receiving the blade 4 inserted thereinto, and has a shape corresponding to the blade 4. However, the punching holes 5a are different from the blade 4 in that they have swelling head holes 5b which has a symmetrical circular cross sectional shape wider than the middle of the punching hole 5a on its both ends, not only the inner end which makes it being different.

When the arm 3 and the main body 2 are closed, the end of the tape T is hooked to the hook 11, thereby the tape T can be pulled out between the ends of the arm 3 and the main body 2. As shown in FIG. 2, the hook 11 is comprising an elongated plate, and the upper end thereof is turnably fixed to a rotating shaft attached to the width direction of the device, so that the other end thereof can be turned inward or outward of the device whereas a claw 11a protruding inward of the device is formed to the other end of the hook 11. Also, the hook 11 is attached inward of the device by a torsion spring 12a.
Further, the hook 11 is supported by the cam 13 attached inward thereof, and the claw 11a is alternately reciprocated inward and outward to the device by turning the cam . Thus, when the claw 11a is moved inward to the device, it slightly enters an opening 11c of a claw receiving 11b protruding from the arm 3 downward.

As shown in FIG. 1, a connecting hole 3a passing through horizontally is formed at the root of the arm 3, and a shaft 15a such as a joint and the like is inserted into the connecting hole 3a and circular holes 2b formed to the both side surfaces 2a of the main body 2, and thereby the arm 3 is turnably attached to the main body 2.
Further, locking pieces 3b protrude downward from the arm 3 on the rear end thereof, one ends of tension springs 12b are locked to locking holes 3c on the surface of the locking pieces 3b, and the other ends of the tension springs 12b are locked to a shaft 15b such as a joint inserted into the both sides of 2b on the main body 2 nearer to the end thereof in order the main body 2 and the arm 3 are opened.

When a grip 16 is gripped, the arm 3 is moved downward and the ends of the arm 3 and the main body 2 are closed, whereas when the grip 16 is opened (released), the end of the arm 3 is opened by the spring 12b.
The grip 16 is comprising a plate, which has an approximately U-shaped cross section that opens downward along a lengthwise direction, as a gripping root end. The both sides of 16a extend from the root end to the middle and the end, and the both sides in the middle and the surface which is overlapped to the side of a bent 3d of the arm 3 are slightly curved and extend downward from the middle, and grip 16 has a locking parts 16b on the end thereof, which held itself back upward as arc-hook-shape.
Circular holes 16c which pass through the both sides of 16a are formed in the middle of the grip 16, and it is turnable by attaching shaft 15d such as a joint member pass through the circular hole 3e, which is on the side of bent portion 3d of the arm 3. The locking portions 16b at the end of the grip 16 are locked to a shaft 15c attached to protrude outward from the both side surfaces 2a of the main body 2 nearer to the end thereof so that the shaft 15c acts as a turning shaft of the grip, and the arm 3 can be moved up and down by gripping the grip 16.

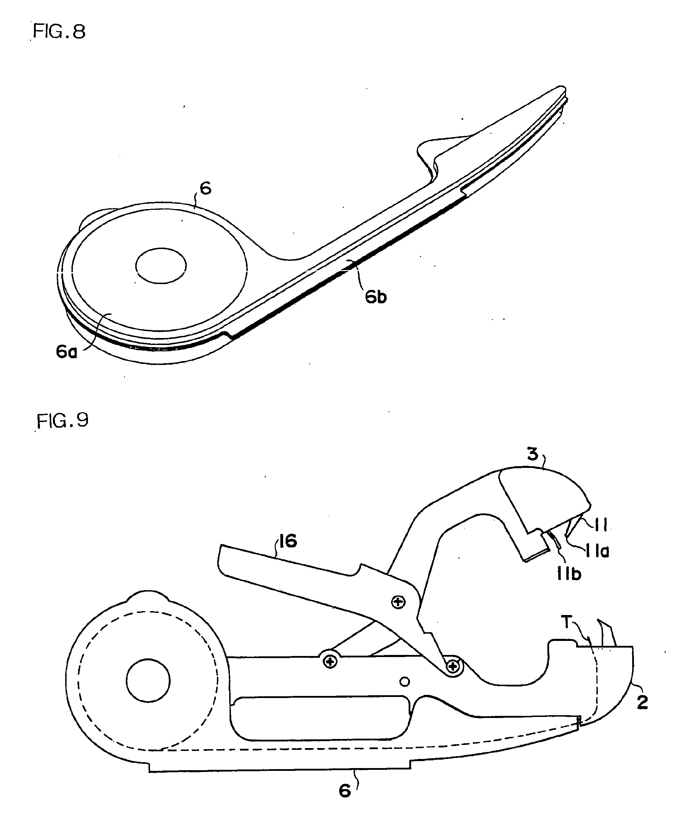

As shown in FIG. 8, The tape accomodating part 6 is located on the lower end of the circular box-like tape storage 6a, which is on the rear end of the main body 2. The tape accomodating part 6 comprising an hollow tape feed portion 6b which is located on the lower end of the main body 2 and extends to the outer end of a tangential line on the outer periphery of the tape storage 6a.
The tape accommodating 6 has a both-side opening structure that can be opened and closed from the upside.
The tape storage 6a is a part in which the rolled tape T is accommodated. The tape T is fed from the tape storage 6a to the end of the main body 2 passing through the tape feed 6b.
When the tape T is run out, the tape accommodating 6 is opened, and a new tape T is accommodated in the tape storage 6a.

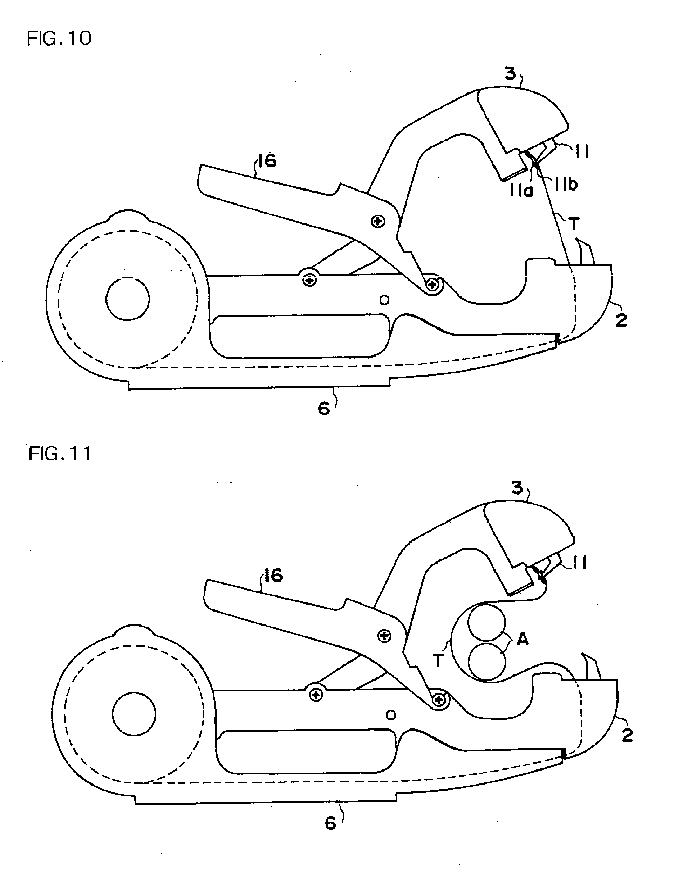

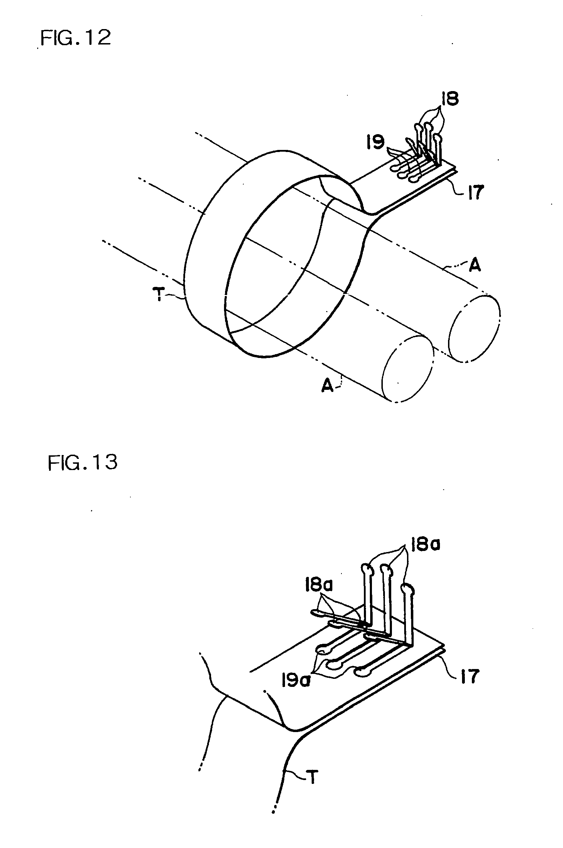

A method of using the binding device 1 for horticulture of the embodiment will be explained as below.
Although any kind of tape may be used for the binding device, it is preferable to use a tape made of paper, a biodegradable material, or a composite material tape mainly comprising them.
As shown in FIG. 9, the tape T is attached such that the end thereof protrudes upward from the end of the main body 2.
When the grip 16 is gripped, the arm 3 is moved downward, and the ends of the arm 3 and the main body 2 are closed. At the time, the hook 11 attached to the end of the arm 3 moves inward, the claw 11a slightly enters the opening 11c of the claw receiving 11b with an end of the tape T hooked to the hook 11, thereby the tape is hooked by the claw and the claw receiving 11b. When the grip 16 is released in this state, the arm 3 is moved upward, and the tape T is pulled out while stretched between the ends of the arm 3 and the main body 2 as shown in FIG. 12.
Next, when a member to be bound A (new treetop, wire, and the like) is accommodated in the curved area of the arm 3 through between the open ends of the main body 2 and the arm 3 as shown in FIG. 11, the tape T is winded around the outer periphery of the member to be bound A.
Subsequently, both ends of the arm and the main body are closed by gripping the grip 16, the blade 4 enters the punching holes 5a. Then, as shown in FIG. 12, it cuts and bents to a tape overlapping part 17 as well as the cutting part of one hand is locked to that of the other and bind the tape. At the time, the tape T is cut off by the cutting blade 10, and when the grip 16 is released, the hook 11 moves outward and releases the tape T, and at the same time, the member to be bound A that is bound by the tape can be released to the outside of the binding device from the opened ends.

Binding pieces 18 having the one end is cutted and the other end is arranged as a bent are formed to the tape overlapping 17. As shown in FIGS. 12 and 13, each of the binding pieces 18 has a swelling head 18a formed to a circular shape and wider than the middle and the end of the binding piece 18. Each of punched holes 19 has a swelling head hole 19a whose end is wide open likewise swelling head 18a, and the swelling head 18a of the binding pieces 18 are obliquely inserted into the swelling head hole 19a and locked passing therethrough, thereby the annularly formed tape can be bound. The binding pieces 18 are not removed because the swelling head s 18a thereof are locked in the middle of the punched holes 19 which becomes narrower in the detaching direction of the tape overlapping 17.
Note that FIG. 12 or 13 shows the binding pieces 18 in an enlarged state so that the configuration thereof can be easily understood.
In the embodiment, the swelling head 18a and the swelling head hole 19a are formed to the circular shape. However those circular shape are accordingly changed when the shape of the swelling head hole 5b of the blade receiving 5 and the swelling head 4a of the blade 4 change.

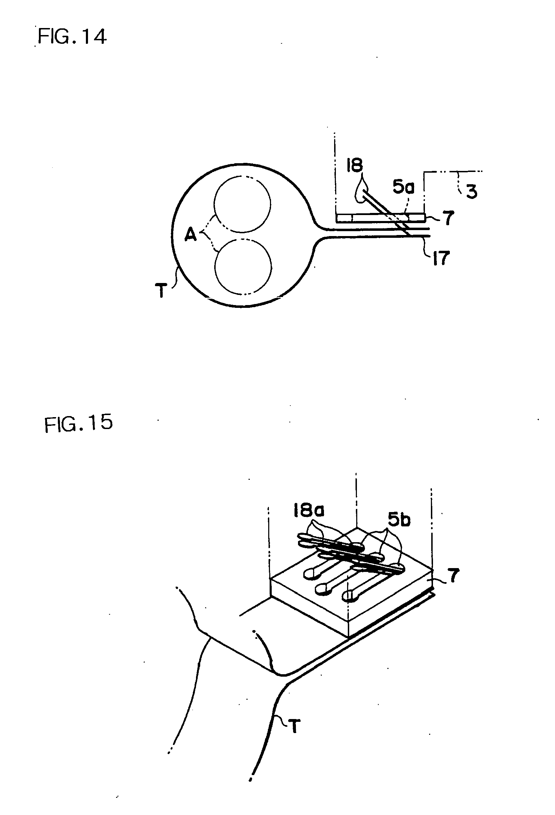

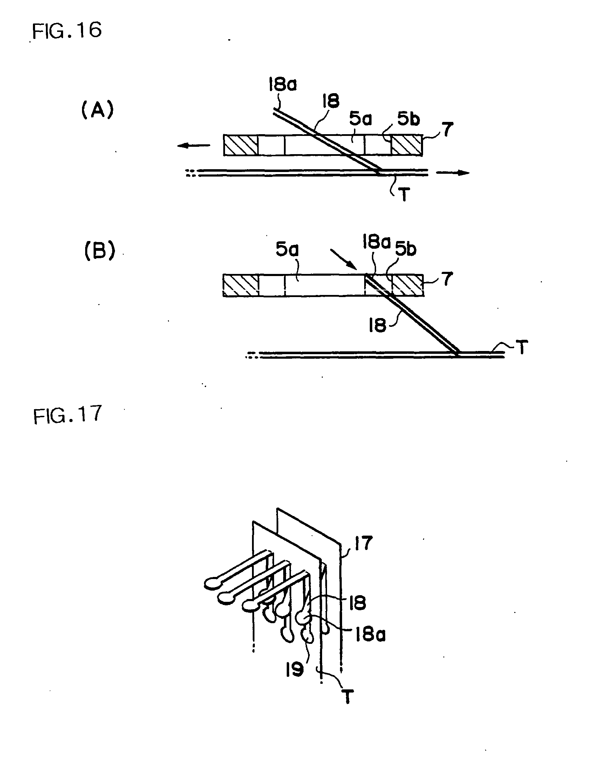

When the cuttting is formed to the tape overlapping 17 by the device 1, the binding pieces 18 are inserted into the punching holes 5a of the plate member 7 as shown in FIGS. 14 to 16. When the device 1 is separated from the member to be bound A through the released end, the plate member 7 (device) and the binding piece 18 (binding tape) are respectively pulled in opposite directions, that is, in an inner end direction and in an outer end direction (in FIG. 16A, in right and left directions which are opposite to each other) . The swelling head 18a of the binding pieces 18 are moved in a direction in which they are pulled, that is, to the end of the punching holes 5a. In the device 1, since the wide swelling head holes 5b are formed to the ends of the punching holes 5a of the plate member 7 as shown in FIG. 16B, there is no possibility that the swelling head 18a are caught to the punching holes 5a and cut off. As a result, the binding pieces 18 can be smoothly extracted from the punching holes 5a.

As described above, when a bound horticulture tape is came loose by the stress received from a bound member, the swelling head 18a of the binding pieces 18 are hooked to the middle of the punched holes 19 of the other tape as shown in FIG. 17, to prevent the tape from being unbound, thereby the binding of the tape can be maintained. The binding can be robustly and stably maintained by three binding pieces.

Next, an another embodiment of the binding device for horticulture of the present invention will be explained referring to the drawings.

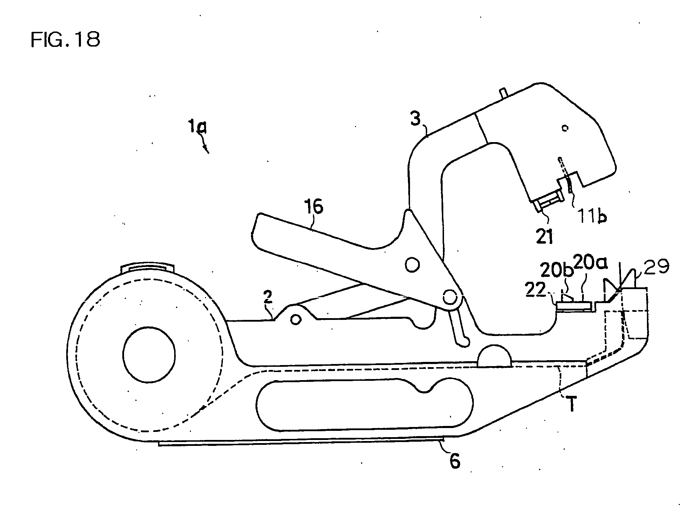

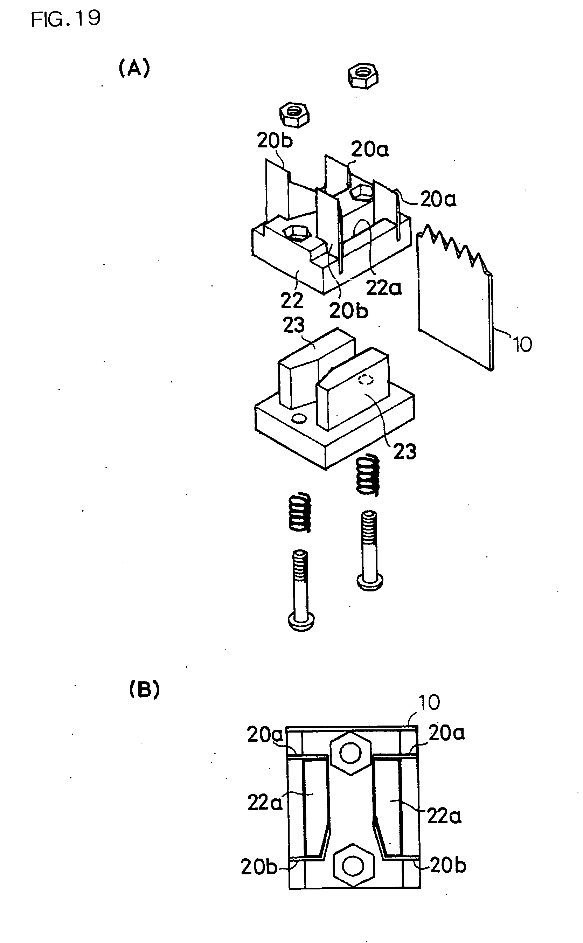

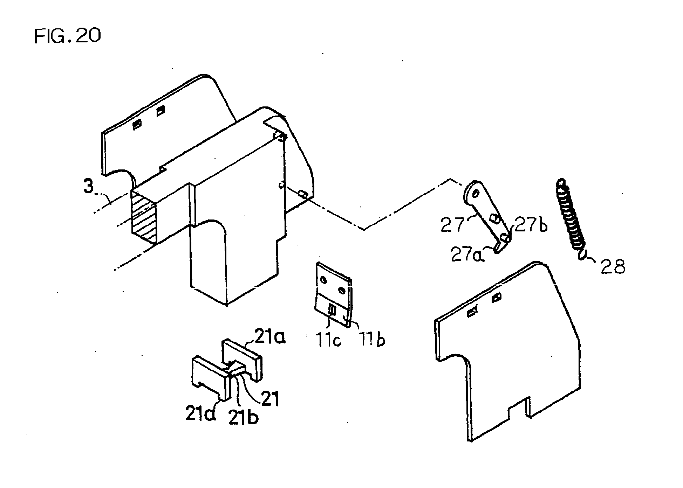

FIG. 18 is a schematic side view showing the another embodiment of the binding device for horticulture of the present invention, and FIGS. 19 and 20 are views showing components of the binding device of FIG. 18.
In the binding device 1a for horticulture, the configuration of a blade 4 and a blade receiver 5 are mainly different from those of the device 1 of the above embodiment, that is, a pair of blade 20a and blade 20b are attached to the end of a main body 2, and a blade receiver 21 is attached to the end of an arm 3.
In the following explanation, the portions having the same configuration as those of the above embodiment use the same names and the same reference numerals as those used in the above embodiment.

As shown in s FIGS. 19A and 19B, each of the pair of blades 20a and 20b, having straight line blade at the protruding tip thereof, are formed at the end and inner of the blade main body 22 so that those blades intersect with each other in a tape lengthwise direction.
Note that although it is sufficient to provide the two pairs of the blades 20a, 20b on at least the end and the inner side, it is also possible to provide three pairs of the blades.
The blades 20a, 20b are protruding on one surface of an approximately rectangular blade main body 22 which can be fixed to an opening 2 of the main body 2 by screws and the like.
The blade 20a, protruding on one end of the blade main body 22 in an approximate length are attached at an appropriate interval along a width direction with their outside ends in conformity with the edge of the blade main body 22.
The blades 20b, protruding on the other end (inner end) are attached in parallel with the blades 20a with their outside ends in conformity with the edges of the blade main body 22 when viewed from a blade tip direction from thereabove. The each inner end of the two blades 20b is bent toward the end and formed so that the end is gradually narrowed as well as the blade tip thereof gradually inclines toward an end.
Further, a cutting blade 10 is fixed to the end of the blade main body 22 with its blade tip facing upward so that the cutting blade 10 cuts off a tape when the main body 2 and the arm 3 are closed.

A pair of deformed-pentagon-shaped insertion holes 22a is formed in an area surrounded by the blades 20a, 20b along the side surfaces of both the blades 20a, 20b of the blade main body 22.
Further, pressing pieces 23 having approximately the same shape as the insertion holes 22a are attached so as to be inserted into the insertion holes 22a from under them so that they protrude from under the insertion holes 22a when the end of the arm 3 is closed.

A blade receiver 21 is formed so that it can shear a tape T in sliding contact with the blades 20a, 20b and cut in the tape when the end of the arm 3 is closed.
As shown in FIG. 20, the blade receiver 21 is formed to an approximately H-shape when viewed from an upside, and approximately rectangular side members 21a, 21a thereof attached in parallel with each other are connected in the near center by connection 21b. When the arm 3 is closed, the side members 21a are located on the end of the blades 20a and on the inner side of the blades 20b in a device, and the connection 21b is located between the pair of blades 20a and the pair of blades 20b.

A hook 27 is attached at nearer to the end of the device than the blade receiver 21 is, so that when the arm 3 and the main body 2 are closed, it hooks the end of the tape T and pull the tape out through between the ends of the arm 3 and the main body 2.
As shown in FIG. 20, the hook 27 is composed of a slender plate, and a root end thereof which is upside of the hook is turnably connected with a rotating shaft in the width direction of the device, so that the end thereof can be turned inward or outward of the device. A claw 27a protruding inward of the device is formed to the end of the hook 27, and columnar protruding portion 27b protrudes approximately vertically from one surface of the hook 27. Further, the hook 27 is biased upward by a tension spring 28 (in a claw protruding direction).

As shown in FIG. 18, a hook receiving 29 which is composed of a plate having an inclining concave upper end is formed to the end of the main body 2 along the lengthwise direction of the device. The hook 27 can move inward or outward of the device by making in contact the peripheral surfaces of the protruding portion 27b with the upper end of the hook receiving 29. That is, when the arm 3 moves downward, the peripheral surfaces of the protruding portion 27b are made in contact with the inclining surface facing inward, the hook 27 moves inward, and the claw 27a is inserted into an opening 11c of the claw receiving 11b and hooks an end of the tape T. When the arm 3 is moved upward in this state, the tape can be pulled out while stretched between the ends of the arm 3 and the main body 2. When the arm 3 is moved downward again, the peripheral surfaces of the protruding portion 27b are made in contact with the inclining surface facing inward, and the hook 27 moves outward, thereby the end of the tape T is released.

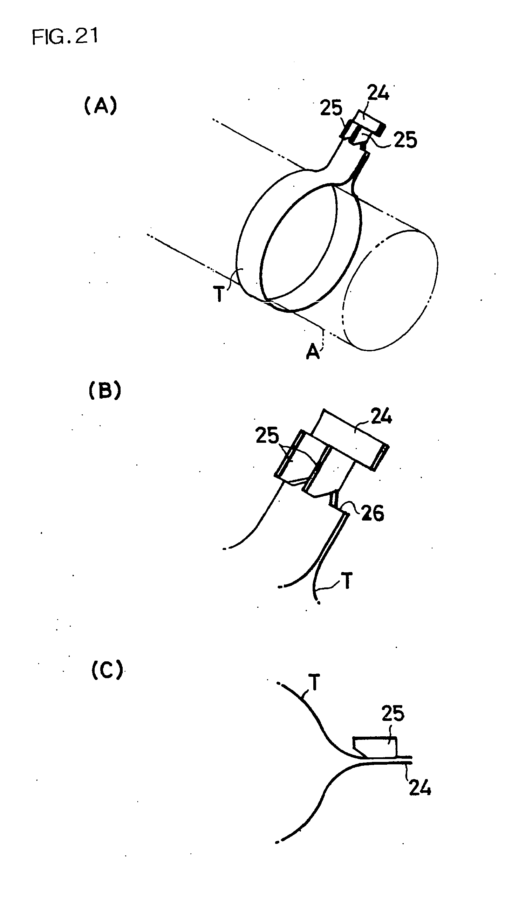

The binding device 1a for horticulture of the embodiment can be used by the same manner as the binding device 1 for horticulture of the above embodiment.
Cutting piece 25 can be formed by the blades 20a, 20b at the end and the inner side of a tape overlapping 24 so that the cutting intersects the tape lengthwise direction, and the cutting piece 25 can be folded by the pressing pieces 23 at right angles along a bending line in the tape lengthwise direction. The inner end of one of the cutting piece 25 is locked to the cutting part 26 of the other tape, thereby the tape T can be bound.
As shown in FIGS. 21A to 21C, bite-shaped inclining portions, which gradually separate from the surface of the tape T from the bending lines toward inner ends, are formed to the inner end of the cutting piece 25. Accordingly, when force to separate the overlapped tapes is applied thereto, the cutting piece 25 on one tape is locked to the cutting part 26 on the other tape in a biting state, so that annular tape ends are maintained in an inseparate state.

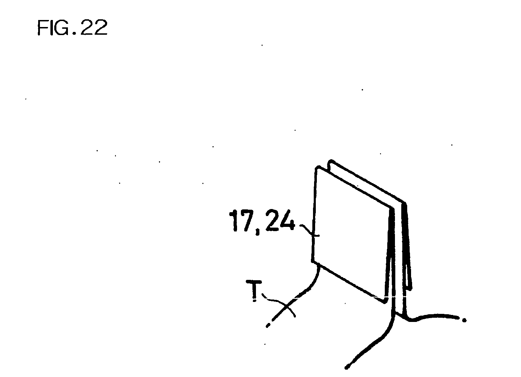

In any of the above embodiments, a tape T comprising one layer may be used, and further a tape comprising a plurality of layers may be also used. Further, as shown in FIG. 22, tape overlapping part 17 and 24 may be formed by turning back one end or the both ends of the tape T to bind. With this arrangement, binding strength can be increased.
Further, the arrangements of the above embodiments by no means restrict the present invention and may be modified as long as they have the same technological object and advantage, and the present invention also covers these modifications.

## Claims

1. A binding device for horticulture, comprising a main body and an arm turnably connected with the main body so that when the both ends of the main body and the arm are opened, a tape is pulled out while stretched from one end to the other end, and that when the both ends thereof are closed, the tape can be formed to an annular shape inward of the device as well as tape can be bound and cut off in an overlapping state on the end thereof, wherein
a blade is formed to one of the arm and the main body, and a blade receiver is formed to the other of them so that the blade confronts the blade receiver, and they form cutting to a tape overlapping part, and
the blade has a shape for cutting and bending the tape to form a locking to the inner end of the cut tape as well as the blade receiver is formed to pull the cut tape out therefrom in an outer end direction, so that the tape can be maintained in a bound state by locking the tape itself.

2. A binding device for horticulture according to claim 1, wherein the blade can punch and bend the tape inward from an end as well as forms a blade shape having such a swelling head that the inner end of a blade tip is wider than the end thereof, and the blade receiver is formed as a punching hole having a swelling head hole in which the both end thereof open wider than the middle part thereof likewise the blade , so that when the end of the arm closes, the swelling head is inserted into the wide opening of the swelling head hole on the inner end thereof and passes therethrough.

3. A binding device for horticulture according to claim 1 or 2, wherein the blade comprises at least two blades attached laterally of the device in parallel with each other, and at least one of the blades is arranged as a guide blade protruding beyond the other blades.

4. A binding device for horticulture according to any of claims 1 to 3, wherein the blade comprises three blades attached laterally of the device in paralle with one another, and the blade located at the center is arranged as a guide blade protruding beyond the blades located on the both sides thereof.

5. A binding device for horticulture according to any of claims 1 to 4, comprising a protection member which covers the blade by being located outward of the end of the blade when the both ends of the main body and the arm open, and which is pressed to the main body or the arm and exposes the end of the blade when the both ends of the main body and the arm close.

6. A binding device for horticulture according to claim 1, wherein blades are formed to at least an end and an inner side thereof so that they intersect a tape lengthwise direction, the blade on the inner side is formed so that the inner side thereof in a tape width direction inclines in an end direction, the blade receiver is formed so that it comes into sliding contact with the blade and shears the tape when the end of the arm closes as well as the blades comprise pressing pieces for bending a cut tape.

7. A binding device for horticulture according to any of claims 1 to 6, wherein a tape formed of paper, a biodegradable material, or a composite material mainly comprising them is used.

8. A method of annularly binding a new treetop and the like with a horticulture tape using a binding device for horticulture arranged so that an arm is turnably connected with a main body , a tape is pulled out by the both ends of the main body and the arm, and the tape is formed to an annular shape inward of the device as well as the tape is bound in an overlapping state and cut off on an end , the method comprising:
forming the tape, which is pulled out by opening the both ends, to the annular shape and then overlapping the inner surface of a tape end and the inner surface of a tape root by closing the both ends;
forming cutting and folding part to a tape overlapping part by a blade and a blade receiver formed to the both ends;
locking the cutting formed to the inner end of one tape to the cutting of the other tape so that the tape is maintained in a bound state; and
pulling the tape overlapping part including the above out in the outer end direction of the device.

9. A method of binding a horticulture tape according to claim 8, wherein a blade , which is formed to a blade shape having such a swelling head that the inner end of a blade tip is wider than the end thereof, and a blade receiver, which has a swelling head hole that opens wide laterally likewise the swelling head , are used, and the end of the device is closed as well as the swelling head is inserted into wide open of the swelling head hole on the inner end.

10. A method of binding a horticulture tape according to claim 8, further comprising forming cutting by a blade and a blade receiver to at least an end and an inner side of a tape so that they intersect a tape lengthwise direction;
forming cutting to an overlapping part of the tape by bending a bending line in the tape lengthwise direction; and
locking the cutting on the other tape which overlaps the inner end of the cutting.

11. A method of binding a horticulture tape according to any of claims 8 to 10, wherein a horticulture tape formed of paper, a biodegradable material, or a composite material mainly comprising them is used.

## Amended claims

### Amended claims under Art. 19.1 PCT

**1.** (canceled)

**2.** (currently amended) A binding device for horticulture, comprising a main body and an arm turnably connected with the main body so that when the both ends of the main body and the arm are opened, a tape is pulled out while stretched from one end to the other end, and that when the both ends thereof are closed, the tape can be formed to an annular shape inward of the device as well as the tape can be bound and cut off in an overlapping state on the end thereof, wherein
a blade is formed to one of the arm or the main body, and a blade receiver is formed to the other of them so that the blade confronts the blade receiver,
the blade can punch and bend the tape inward of the device from an end of the device as well as forms a blade shape having such a swelling head that the inner of the device of a blade tip is wider than the end of the device,
the blade receiver is formed as a punching hole having a swelling head hole in which the both end thereof open wider than the middle part thereof so that when the end of the arm closes, the swelling head is inserted into the wide opening of the swelling head hole on the inner of the device thereof and passes therethrough.

**3.** (currently amended) A binding device for horticulture according to claim 2, wherein the blade comprises at least two blades disposed laterally of the device in parallel with each other, and at least one of the blades is arranged as a guide blade projecting to the blade receiver beyond the other blades.

**4.** (currently amended) A binding device for horticulture according to claim 2 or 3, wherein the blade comprises three blades disposed in the device width direction in parallel with one another, and the blade located at the center is arranged as a guide blade projecting to the blade receiver beyond the blades located on the both thereof.

**5.** (currently amended) A binding device for horticulture according to any of claims 2 to 4, comprising a protection member which covers the blade by being located outward of the end of the blade when the both ends of the main body and the arm open and which is pressed to the main body or the arm and exposes the end of the blade when both the ends of the main body and the arm close.

**6.** (currently amended) A binding device for horticulture, comprising a main body and an arm turnably connected with the main body so that when the both ends of the main body and the arm are opened, a tape is pulled out while stretched from one end to the other end, and that when the both ends thereof are closed, the tape can be formed to an annular shape inward of the device as well as the tape can be bound and cut off in an overlapping state on the end thereof, wherein
a blade is formed to one of the arm or the main body, and a blade receiver is formed to the other of them so that the blade confronts the blade receiver,
at least two blades are formed to an end and an inner side thereof so that they intersect a tape lengthwise direction, the blade on the inner side of the device is formed so that the inner side thereof in a tape width direction inclines in an end of the device direction, the blade receiver is formed so that it comes into sliding contact with the blade and shears the tape when the end of the arm closes as well as the blades comprise pressing pieces for bending a cut tape.

**7.** (currently amended) A binding device for horticulture according to any of claims 2 to 6, wherein a tape formed of paper, a biodegradable material, or a composite material mainly comprising them is used.

**8.** (canceled)

**9.** (currently amended) A method of annularly binding a new treetop and the like with a horticulture tape using a binding device for horticulture arranged so that an arm is turnably connected with a main body , a tape is pulled out by the both ends of the main body and the arm, and the tape is formed to an annular shape inward of the device as well as the tape is bound in an overlapping state and cut off on an end , the method comprising:
forming the tape, which is pulled out by opening both end of the main body and the arm, to the annular shape and then overlapping the inner surface of a tape end and the inner surface of a tape root by closing both ends;
using a blade, which is formed to a blade shape having such a swelling head that a blade tip is made wider on a inner of the device than a device end, and a blade receiver arranged as a punching hole, which has a swelling head hole that opens wider on both end than an middle thereof;
forming cutting and bent to a tape overlapping part by inserting the swelling head into the wide open part of the swelling head hole on the inner of the device; and
maintaining the bound state of the tape by locking the cutting formed to the inner of the device of one tape to the cutting of the other tape.

**10.** (currently amended) A method of annularly binding a new treetop and the like with a horticulture tape using a binding device for horticulture arranged so that an arm is turnably connected with a main body , a tape is pulled out by the both ends of the main body and the arm, and the tape is formed to an annular shape inward of the device as well as the tape is bound in an overlapping state and cut off on an end , the method comprising:
forming the tape, which is pulled out by opening the both ends of the main body and the arm , to the annular shape and then overlapping the inner surface of a tape end and the inner surface of a tape root by closing the both ends;
forming at least two blades so as to intersect a tape lengthwise direction;
forming at least Lwo cuttings that intersect the tape lengthwise direction by a blade on the inner of the device which is formed so that the inner thereof in a tape width direction is narrowed and inclined toward the device end and a blade receiver which is formed so that it comes into sliding contact with the blade and shears the tape when the end of the arm closes;
forming cutting piece to an overlapping tape part by bending a cutting part along a bending line in the tape lengthwise direction by pressing pieces and locking the cutting of the other tape in which the cutting pieces are overlapped on the inner of the device.

**11.** (currently amended) A binding device for horticulture according to claim 9 or 10, wherein a horticulture tape formed of paper, a biodegradable material, or a composite material mainly comprising them is used.
